# EUROPEAN PATENT APPLICATION

(11) **EP 4 274 144 A1**
(43) Date of publication of application: **08.11.2023**
(21) Application number: 21914504.2
(22) Date of filing: 29.12.2021
(51) Int. Cl.: H04L 5/00, H04W 72/04

(54) **DATA TRANSMISSION METHOD AND DEVICE, AND STORAGE MEDIUM**

(30) Priority: 30.12.2020 CN 202011613269
(71) Applicant: ZTE Corporation, Shenzhen, Guangdong 518057 (CN)
(72) Inventor: YANG, Jin, Shenzhen, Guangdong 518057 (CN); LU, Youxiong, Shenzhen, Guangdong 518057 (CN)
(74) Representative: Aipex B.V.
(86) International application number: PCT/CN2021/142482
(87) International publication number: WO 2022/143772

(57) **Abstract**

Provided are a data transmission method and device and a storage medium. The data transmission method includes: indicating a reference resource set, where the reference resource set includes at least one reference resource, and the reference resource includes at least one of: a first type resource or a second type resource; and receiving feedback information for at least one reference resource in the reference resource set.

## Description

This application claims priority to Chinese Patent Application No. 202011613269.9 filed with the China National Intellectual Property Administration (CNIPA) on Dec. 30, 2020, the disclosure of which is incorporated herein by reference in its entirety.

### TECHNICAL FIELD

The present application relates to communication, for example, a data transmission method and device and a storage medium.

### BACKGROUND

With the development of wireless communication technologies and the increasing demand of users for communication, the 5th Generation (5G) mobile communication technology has become a trend of future network development to satisfy higher, faster and newer communication requirements.

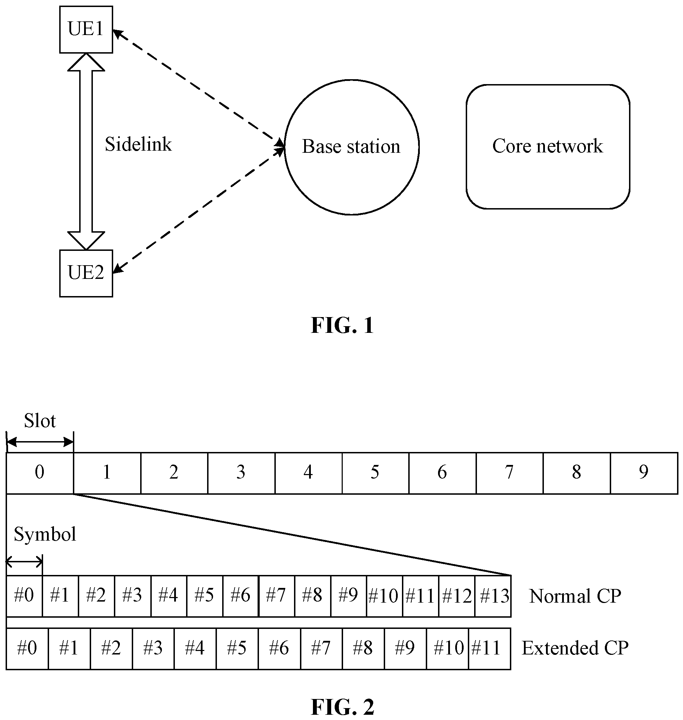

In a sidelink communication system, when services need to be transmitted between user equipments (UEs), service data between UEs is not forwarded by a network side, that is, the service data is not forwarded by a cellular link between UEs and a base station, but is directly transmitted by a data source LTE to a target LTE through the sidelink. FIG. 1 is a diagram of a sidelink communication structure. As shown in FIG. 1, this mode of direct communication between UEs has characteristics that are different from the communication mode of a cellular system. For short-range communication users to whom the sidelink communication can be applied, the sidelink communication not only saves wireless spectrum resources, but also reduces the data transmission pressure of the core network. Therefore, the system resource occupation is reduced, the spectral efficiency of the cellular communication system is increased, the terminal transmission power consumption is reduced, and network operating costs are greatly saved.

In 5G sidelink communication, when selecting resources in a sidelink resource pool, a LTE can only perform determination based on monitoring measurements of the LTE and select optimal resources for sending sidelink signals, resulting in limited accuracy and efficiency in resource selection.

### SUMMARY

Embodiments of the present application provide a data transmission method and device and a storage medium, so that the resource utilization efficiency is improved, the signaling overhead is reduced, and the processing complexity of the device is reduced.

An embodiment of the present application provides a data transmission method applied to a first communication node. The method includes the following:
indicating a reference resource set, where the reference resource set includes at least one reference resource, and the reference resource includes at least one of: a first type resource or a second type resource; and
receiving feedback information for at least one reference resource in the reference resource set.

An embodiment of the present application provides a data transmission method applied to a second communication node. The method includes the following:
receiving indication information of a reference resource set, where the reference resource set includes at least one reference resource, and the reference resource includes at least one of: a first type resource or a second type resource;
determining feedback information for at least one reference resource in the reference resource set; and
sending the feedback information.

An embodiment of the present application provides a data transmission apparatus applied to a first communication node. The apparatus includes an indicator and a receiver.

The indicator is configured to indicate a reference resource set, where the reference resource set includes at least one reference resource, and the reference resource includes at least one of: a first type resource or a second type resource.

The receiver is configured to receive feedback information for at least one reference resource in the reference resource set.

An embodiment of the present application provides a data transmission apparatus applied to a second communication node. The apparatus includes a receiver, a determination module and a sender.

The receiver is configured to receive indication information of a reference resource set, where the reference resource set includes at least one reference resource, and the reference resource includes at least one of: a first type resource or a second type resource.

The determination module is configured to determine feedback information for at least one reference resource in the reference resource set.

The sender is configured to send the feedback information.

An embodiment of the present application provides a data transmission device. The device includes a communication module, a memory and one or more processors.

The communication module is configured to perform communication interaction between a first communication node and a second communication node.

The memory is configured to store one or more programs.

The one or more programs, when executed by the one or more processors, cause the one or more processors to implement the method according to any of the preceding embodiments.

An embodiment of the present application provides a storage medium for storing a computer program which, when executed by a processor, implements the method according to any of the preceding embodiments.

### BRIEF DESCRIPTION OF DRAWINGS

FIG. 1 is a diagram of a sidelink communication structure;
FIG. 2 is a diagram of a time domain resource structure in a 5G system;
FIG. 3 is a diagram of a frequency domain resource structure in a 5G system;
FIG. 4 is a diagram illustrating a kind of configuration of sidelink channel resources in a 5G system;
FIG. 5 is a diagram illustrating another kind of configuration of sidelink channel resources in a 5G system;
FIG. 6 is a flowchart of a data transmission method according to an embodiment of the present application;
FIG. 7 is a flowchart of another data transmission method according to an embodiment of the present application;
FIG. 8 is a flowchart of another data transmission method according to an embodiment of the present application;
FIG. 9 is a diagram illustrating the configuration of a second LTE according to an embodiment of the present application;
FIG. 10 is a flowchart of another data transmission method according to an embodiment of the present application;
FIG. 11 is a flowchart of another data transmission method according to an embodiment of the present application;
FIG. 12 is a flowchart of another data transmission method according to an embodiment of the present application;
FIG. 13 is a flowchart of another data transmission method according to an embodiment of the present application;
FIG. 14 is a flowchart of another data transmission method according to an embodiment of the present application;
FIG. 15 is a diagram illustrating the indication between a resource pattern index and slots according to an embodiment of the present application;
FIG. 16 is a diagram illustrating the determination of a resource index number of a reference resource according to an embodiment of the present application;
FIG. 17 is a block diagram of a data transmission apparatus according to an embodiment of the present application;
FIG. 18 is a block diagram of another data transmission apparatus according to an embodiment of the present application; and
FIG. 19 is a diagram illustrating the structure of a data transmission device according to an embodiment of the present application.

### DETAILED DESCRIPTION

Embodiments of the present application are described hereinafter in conjunction with drawings. The present application is described hereinafter in conjunction with the embodiments and the drawings. The examples listed hereinafter are merely intended to explain the present application and not to limit the scope of the present application. It is to be noted that if not in collision, the embodiments of the present application and features therein may be combined with each other in any manner.

In the fifth generation (5G) communication system, the minimum granularity of time domain resources is a symbol. Symbols may include cyclic prefix-orthogonal frequency division multiplex (CP-OFDM) symbols or discrete Fourier transform spread OFDM (DFT-S-OFDM) symbols. FIG. 2 is a diagram of a time domain resource structure in a 5G system. As shown in FIG. 2, a slot includes consecutive symbols of 12 extended cyclic prefixes (CPs) or consecutive symbols of 14 normal CPs. Alternatively, one or more consecutive symbols (less than or equal to 7 symbols) may compose a mini-slot.

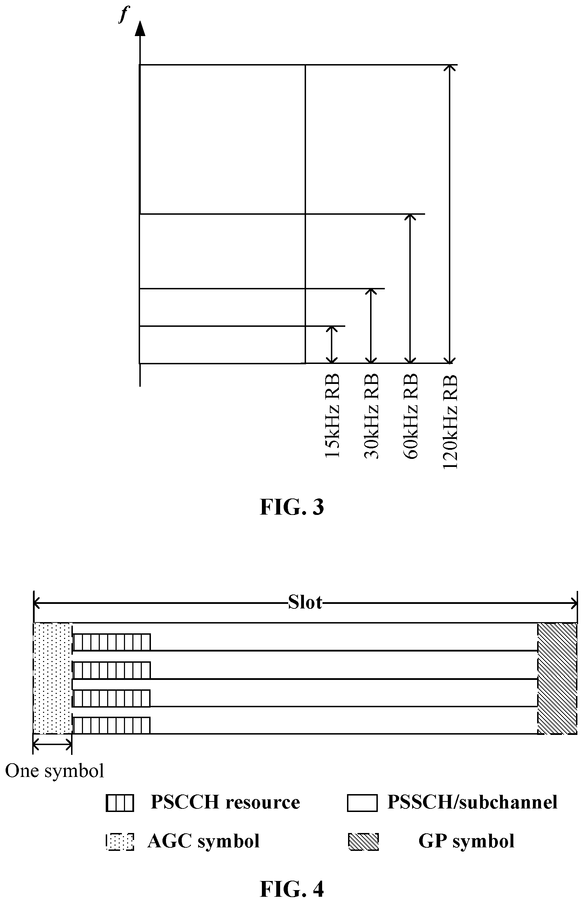

FIG. 3 is a diagram of a frequency domain resource structure in a 5G system. As shown in FIG. 3, on a frequency domain, the minimum granularity of resources is a sub-carrier. According to different system sub-carrier spacing (SCS) configuration, the frequency domain width contained in each sub-carrier is different, and frequency domain widths include one or more of 15kHz, 30kHz, 60kHz, 120kHz and 240kHz. 12 consecutive sub-carriers may compose a frequency domain resource block (RB), and RBs corresponding to different SCS have different frequency domain widths.

As described above, on a time domain, a symbol, a slot or a mini-slot is a time domain resource unit during time domain resource configuration in the 5G system, and RB is a frequency domain resource unit during frequency domain resource configuration. In combination with the minimum resource granularity on the time domain and the minimum resource granularity on the frequency domain, a resource element (RE) is defined as a resource granule composed of a symbol on the time domain and a sub-carrier on the frequency domain. In bearer mapping processing of information, an RE may be used for mapping a modulation symbol.

In a sidelink communication system, sidelink resources are used between LTEs for information transmission. Depending on specific application scenes and service types, sidelink communication manners include but are not limited to: device-to-device (D2D) communication, vehicle-to-vehicle (V2V) communication, etc. In sidelink communication in the related art, a UE uses a resource in a sidelink resource pool to send sidelink signals.

In an embodiment, the sidelink resource pool includes one or more of following sidelink channels: a physical sidelink control channel (PSCCH), a physical sidelink shared channel (PSSCH), a physical sidelink broadcast channel (PSBCH), a physical sidelink discovery channel (PSDCH) and a physical sidelink feedback channel (PSFCH).

A PSCCH resource is used for bearing sidelink control information, including sidelink scheduling control information and/or channel state information (CSI); a PSSCH resource is used for bearing sidelink data service information and/or sidelink control information; a PSBCH resource is used for bearing sidelink broadcast information; a PSDCH resource is used for bearing sidelink discovery signals; a PSFCH resource is used for bearing sidelink acknowledgement (ACK)/negative acknowledgement (NACK) (A/N) information and/or sidelink CSI feedback control information.

Generally, according to specific scene requirements, the network side will configure a sidelink resource pool for a sidelink UE, or the system will pre-configure a sidelink resource pool. The LTE uses resources in the sidelink resource pool for bearing sidelink information. In the network side configuration or system predefined configuration, the sidelink resource pool includes any one or more of the preceding types of sidelink channel resources. The system may be a wireless communication network system, which may be considered as to be determined by higher-level nodes, and the sidelink resource pool is a resource set in the predefined configuration.

In a case of information interaction between UEs in the sidelink, a transmit UE send sidelink control information (SCI) on a PSCCH resource to indicate a PSSCH resource used for transmitting sidelink data information and related control information, such as a modulation and coding scheme (MCS), a power control indication and a data retransmission indication, to a receive UE. Further, the transmit UE sends sidelink data on the PSSCH resource indicated by the SCI. After receiving and processing the sidelink data information on the PSSCH resource, the receive UE may further generate a corresponding A/N according to received sidelink data information results and according to the configuration or indications of the transmit UE, and feed back the A/N to the transmit UE on a corresponding PSFCH resource. In addition, the UE may also send sidelink broadcast information on a PSBCH resource and sidelink discovery information on a PSDCH resource.

In a case where the resource in the resource pool is used for performing sidelink communication, the UE should use, according to the configuration of various types of channels in the resource pool, corresponding channel resources to bear corresponding sidelink information. That is, the UE should determine the resource configuration of various types of sidelink channels included in the sidelink resource pool, and the resource configuration of each channel includes resource units and resource positions of this channel. A resource unit of a channel refers to the number of time domain resource units and the number of frequency domain resource units included in each channel; a resource position of a channel refers to the position of each channel resource unit in the resource pool.

In the sidelink resource pool, for any type of sidelink channel, corresponding channel resource units and resource positions may be defined. Based on the resource configuration of various types of channels in the resource pool, the UE uses a corresponding channel resource for bearing corresponding sidelink information or signals to achieve sidelink communication.

FIG. 4 is a diagram illustrating a kind of configuration of sidelink channel resources in a 5G system. In the sidelink communication system, the resource configuration manner of various channels in the resource pool is shown in FIG. 4. The resource pool includes PSCCH channels and PSSCH channels. Due to the requirement for sending or receiving sidelink signals, in all symbols configured for the sidelink which are in each slot included in the resource pool, the first symbol is used as an automatic gain control (AGC) symbol for signal power, and the last symbol is used as a guard period (GP) symbol. The AGC symbol and the GP symbol may be considered as fixed overhead in the sidelink resource configuration. In the illustration of the example described below, the AGC symbol and the GP symbol are not used as sidelink available symbols, and the sidelink channel resource configuration does not include the AGC symbol and the GP symbol.

In the example of the sidelink channel resource configuration shown in FIG. 4, the resource pool includes multiple slots, and resource units and resource positions of each channel resource are configured in units of slots. A PSSCH resource unit refers to all symbols configured as available sideink symbols in a slot, serving as a time domain resource unit for a PSSCH resource; a subchannel serves as a frequency domain resource unit, each subchannel includes an integer number of RBs, and the number m of included RBs is also referred to as the size of the subchannel. Each slot included in the resource pool includes multiple available sidelink symbols, and the PSSCH resource is located, on the time domain, on all available symbols from the first available sidelink symbol in this slot. On the frequency domain, the resource pool includes multiple RBs, from the first RB in the resource pool, each m RBs are divided as a subchannel according to the size m of the subchannel; and each PSSCH channel resource is located on one or more corresponding subchannels. When using the PSSCH resource to send sidelink information, the UE may use one or more subchannels to bear corresponding data information. APSCCH resource unit is composed of t symbols and k RBs, where the t symbols serve as time domain resource units, and the k RBs server as frequency domain resource units. Each PSCCH channel resource is located, on the time domain, on consecutive t symbols from the first available symbol of available symbols, and on the frequency domain, on the position of consecutive k RBs from the first RB in a corresponding subchannel.

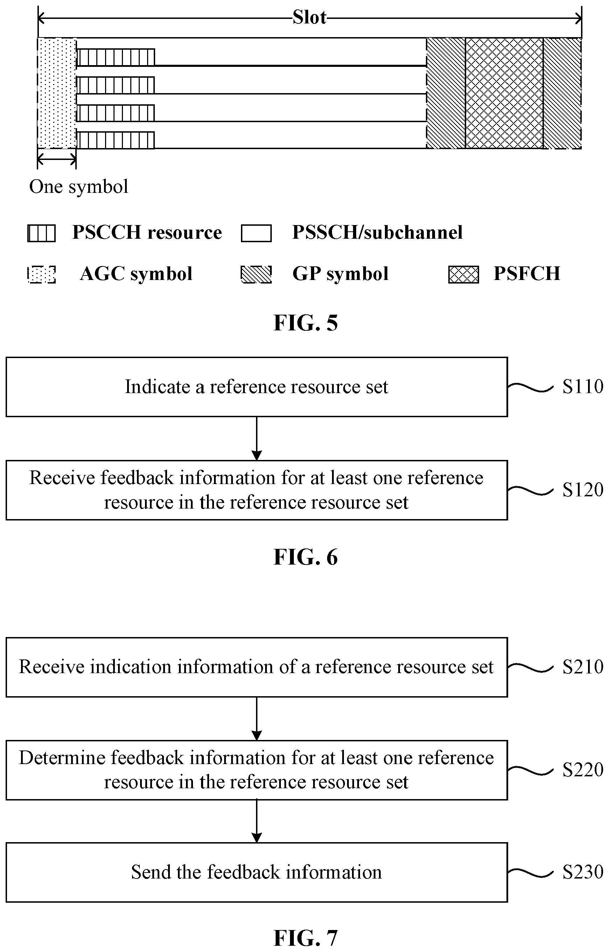

FIG. 5 is a diagram illustrating another kind of configuration of sidelink channel resources in a 5G system. As shown in FIG. 5, this resource pool includes three types of channels: the PSCCH, the PSSCH and the PSFCH. That is, FIG. 5 shows an example of configuring a resource pool that includes the PSCCH, the PSSCH, and the PSFCH. On available symbols of a slot, the PSFCH uses the last s available symbols (that is, available symbols before a GP symbol at the end of the slot). Time division is performed between the PSFCH resource and other two types of channel resources, and a GP symbol needs to be additionally set between the PSFCH resource and the PSSCH resources. Similarly, the GP symbol located in front of the PSFCH symbol is not included in available symbols.

In the current resource scheme of sidelink communication, in a case where UEs perform sidelink communication, the transmit UE (denoted as a Tx UE) may independently select a resource in the resource pool for bearing sidelink control information and/or sidelink data information, and send the resource to other UEs. When the Tx UE selects the resource in the resource pool, the Tx UE performs monitoring within the resource pool and selects an optimal resource according to monitoring results. When the LTE performs monitoring, at least one of following operations is specifically performed on resources in the resource pool: detecting, measuring or receiving the resources in the resource pool. The optimal resources selected by the UE according to the listening results include at least one of: a resource that are is used by other UEs, a resource with relatively low interference or a resource without conflicts. The UE selects a PSCCH for sending SCI, and selects a PSSCH resource corresponding to the PSCCH for sending data information.

In the preceding resource selection process, the Tx UE performs determination and selects the optimal resource for information transmission only depending on the monitoring by the Tx UE on the resource usage in the resource pool. Due to factors such as the monitoring range of the Tx UE and half duplex, the resource selected by the Tx UE may conflict with resources used by other UEs, which results in interference. To further improve the resource utilization rate of the Tx UE selecting the resource for sidelink communication, optimize resource selection, avoid conflicts and reduce interference, the present application proposes a method for feeding back a UE resource set, so that the Tx UE can acquire resource feedback information from other UEs, the resource selection determination of the Tx UE is assisted in, and better resource selection results are acquired.

The present application proposes a data transmission method and apparatus and a device for sidelink communication. A first communication node acquires feedback information for a reference resource from a second communication node, and then performs resource selection based on the feedback information, so that the sidelink resource utilization rate is improved.

Entities of the network side in the present application may include, but not limited to, a gNodeB (gNB), a relay node (RN), a multi-cell/multicast coordination entity (MCE), a gateway (GW), a sidelink management or control node, a mobility management entity (MME), an Evolved Universal Terrestrial Radio Access Network (EUTRAN) and an Operation, Administration, and Maintenance (OAM) manager. For convenience, in the present application, a base station is used as an example for description.

In an embodiment, FIG. 6 is a flowchart of a data transmission method according to an embodiment of the present application. The embodiment may be performed by a first communication node. The first communication node may be a first user equipment (denoted as a first UE), that is, a sender of sidelink information. As shown in FIG. 6, the embodiment includes S110 and S120.

In S110, a reference resource set is indicated.

The reference resource set includes at least one reference resource, where the at least one reference resource includes at least one of: a first type resource or a second type resource.

In S120, feedback information for at least one reference resource in the reference resource set is received.

In the embodiment, the first communication node indicates the reference resource set to a second communication node so that the second communication node detects at least one reference resource in the reference resource set and sends an obtained detection result as feedback information to the first communication node; the first communication node acquires the feedback information for the reference resource from the second communication node and selects a resource based on the feedback information, so that the determination by the first communication node on resource selection is assisted in, and thus the sidelink resource utilization rate is improved.

In an embodiment, the first type resource is a reference resource that meets a first transmission condition, or the second type resource is a reference resource that meats a second transmission condition.

In the embodiment, the first transmission condition refers to a condition that satisfies the first communication node transmitting sidelink information. For example, for the first communication node, the first type resource may include: a resource with low communication interference, a resource with no conflict, a resource not used by other UEs, a resource with low reference signal received power (RSRP) and a resource with high priority. That is, the first type resource is a candidate resource when the first communication node selects a resource for sidelink information sending, and may be selected by the first communication node for sending sidelink data and/or control information. The second transmission condition refers to a condition that does not satisfy the first communication node transmitting sidelink information. For example, for the first communication node, the second type resource may include: a resource with high communication interference, a resource with a conflict, a resource used by other UEs, a resource with high RSRP and a resource with low priority. That is, for the first communication node, the second type resource is a low-priority resource that is selected and used for sending sidelink information, that is, a resource that is not included in a candidate resource set, or a resource that is less likely to be selected for use.

In an embodiment, the at least one reference resource includes at least one of: a PSCCH resource, a PSSCH resource, a PSFCH resource, a PSCCH resource and a PSSCH resource associated with the PSCCH resource, or a PSSCH resource and a PSFCH resource associated with the PSSCH resource.

In the embodiment, as shown in FIG. 4, for any PSCCH resource, a corresponding PSSCH resource refers to one or more subchannel resources started from a subchannel overlapping an RB where the PSCCH resource is located on the frequency domain. That is, the PSSCH resource associated with the PSCCH resource refers to a PSSCH resource included in a subchannel having the smallest subchannel index number in the PSSCH resource.In the embodiment, as shown in FIG. 5, for any PSSCH resource, according to the configuration of the sidelink resource pool, a corresponding timing relationship and feedback manner exists between the PSSCH resource and the PSFCH resource. Further, one or more PSFCH resources corresponding to the PSSCH resource can be determined.

In an embodiment, the first communication node indicating the reference resource set includes: indicating resource configuration information of the at least one reference resource.

Resource configuration information includes at least one of:
a time domain resource of a reference resource;
a frequency domain resource of a reference resource;
a time domain resource and a frequency domain resource of a reference resource; or
a resource pattern index of a reference resource.

In an embodiment, the first communication node indicating the reference resource set includes indicating at least one of following parameters: a period of a reference resource; a priority threshold; a reference signal received power (RSRP) threshold; the number of reference resources which need to be fed back or a delay threshold of receiving the feedback information. In an embodiment, the priority threshold and the RSRP threshold may also be defined by the system as fixed values.

In an embodiment, the first communication node indicates the reference resource set in at least one of following manners: bearing on a PSSCH resource; indicating through a radio resource control (RRC) message; indicating through medium access control (MAC) information; indicating through SCI or indicating through second stage SCI.

In an embodiment, receiving the feedback information for the at least one reference resource in the reference resource set includes at least one of cases described below.

Acknowledgement information for a reference resource is received, where the acknowledgement information represents that the corresponding reference resource is available.

Negative acknowledgement information for a reference resource is received, where the negative acknowledgement information represents that the corresponding reference resource is unavailable.

In an embodiment, in a case where each of the at least one reference resource is the second type resource, receiving the feedback information for the at least one reference resource in the reference resource set includes at least one of cases described below.

Acknowledgement information for a reference resource is received, where the acknowledgement information represents that the corresponding reference resource is unavailable.

Negative acknowledgement information for a reference resource is received, where the negative acknowledgement information represents that the corresponding reference resource is available.

In an embodiment, receiving the feedback information for the at least one reference resource in the reference resource set further includes that the feedback information is a measurement result of the at least one reference resource.

A measurement result includes at least one of:
RSRP of a reference resource;
priority of a reference resource; or
priority indicated in SCI received on a reference resource.

In an embodiment, the first communication node marks at least one reference resource in the reference resource set according to the received feedback information.

In an embodiment, marking the at least one reference resource in the reference resource set includes at least one of cases described below.

In response to feedback information corresponding to a reference resource being acknowledgement information, the reference resource is marked as an available resource.

In response to feedback information corresponding to a reference resource being negative acknowledgement information, the reference resource is marked as an unavailable resource.

In response to feedback information corresponding to a reference resource being RSRP of the reference resource and the RSRP of the reference resource being lower than a set RSRP threshold, the reference resource is marked as an available resource.

In response to feedback information corresponding to a reference resource being RSRP of the reference resource and the RSRP of the reference resource being higher than a set RSRP threshold, the reference resource is marked as an unavailable resource.

In response to feedback information corresponding to a reference resource being priority of the reference resource and the priority of the reference resource being higher than a set priority threshold, the reference resource is marked as an available resource.

In response to feedback information corresponding to a reference resource being priority of the reference resource and the priority of the reference resource being lower than a set priority threshold, the reference resource is marked as an unavailable resource.

In response to feedback information corresponding to a reference resource being priority indicated in SCI received on the reference resource and the priority indicated in the SCI being higher than a set priority threshold, the reference resource is marked as an unavailable resource.

In response to feedback information corresponding to a reference resource being priority indicated in SCI received on the reference resource and the priority indicated in the SCI being lower than a set priority threshold, the reference resource is marked as an available resource.In an embodiment, the first communication node selecting at least one resource for sending sidelink information includes at least one of cases described below.

The first communication node randomly selects at least one available resource from the marked available resource for sending the sidelink information.

The first communication node selects at least one available resource from the marked available resource with a first preset probability for sending the sidelink information.

The first communication node places the marked available resource in a candidate resource set, and randomly selects at least one resource from the candidate resource set for sending the sidelink information.

In an embodiment, the first communication node performs at least one of operations described below for the unavailable resource.

The unavailable resource is excluded from a candidate resource set.

The unavailable resource is selected with a second preset probability for sending sidelink information.

In a case where a candidate resource set or an available resource set is an empty set, the unavailable resource is selected for sending sidelink information. In the embodiment, the first preset probability and the second preset probability may be pre-configured or pre-defined, which is not limited.

In an embodiment, in the case where the each of the at least one reference resource is a second type resource, the first communication node marking the at least one reference resource in the reference resource set according to the feedback information includes at least one of cases described below.

In response to feedback information corresponding to a reference resource being acknowledgement information, the reference resource is marked as an unavailable resource.

In response to feedback information corresponding to a reference resource being negative acknowledgement information, the reference resource is marked as an available resource.

In an embodiment, the first communication node receiving the feedback information for the at least one reference resource in the reference resource set includes one of: receiving on a PSSCH resource; acquiring through an RRC message; acquiring through MAC information; acquiring through SCI; acquiring through second stage SCI; receiving on a PSFCH resource; or receiving on a reserved resource block (RB) on a PSFCH symbol.

In an embodiment, in the case of receiving the feedback information for the at least one reference resource in the reference resource set, the feedback information for the at least one reference resource may be determined as acknowledgement information or negative acknowledgement information in at least one of following manners: indicating a reference resource by a bitmap; a resource index number of a reference resource; or a resource pattern index of a reference resource. In the embodiment, the feedback information for the at least one reference resource is determined as the acknowledgement information or the negative acknowledgement information by the second communication node through a bitmap, a resource index number of a reference resource or a resource pattern index of a reference resource.

In an embodiment, in a case where the feedback information for the at least one reference resource is determined as the acknowledgement information or the negative acknowledgement information by the bitmap, feedback information for each reference resource in the reference resource set is separately indicated with 1 bit according to an order of the at least one reference resource in the reference resource set.

In an embodiment, in a case where the feedback information for the at least one reference resource is determined as the acknowledgement information or the negative acknowledgement information according to the resource index number of the reference resource, the resource index number of the reference resource refers to at least one of resource index numbers described below.

The resource index number may be a resource index number determined by sequencing the at least one reference resource in the reference resource set according to an order of the at least one reference resource in the reference resource set.

The resource index number may be a resource index number determined by sequencing the at least one reference resource in the reference resource set according to a time domain order of the at least one reference resource in the reference resource set.

The resource index number may be a resource index number determined by sequencing reference resources which are after a slot where the feedback information is located according to a time domain order of the reference resources in the reference resource set.

A slot number of the reference resource may be used as the resource index number of the reference resource.

A frequency domain subchannel serial number of the reference resource may be used as the resource index number of the reference resource.

In an embodiment, FIG. 7 is a flowchart of another data transmission method according to an embodiment of the present application. The embodiment may be executed by a terminal side (such as a user equipment). As shown in FIG. 7, the embodiment includes S210 to S230.

In S210, indication information of a reference resource set is received.

The reference resource set includes at least one reference resource, where the at least one reference resource includes at least one of: a first type resource or a second type resource.

In S220, feedback information for at least one reference resource in the reference resource set is determined.

In S230, the feedback information is sent.

In the embodiment, a second communication node receives a reference resource set indicated by a first communication node, determines feedback information for at least one reference resource in the reference resource set according to a measurement result of the at least one reference resource, and sends the feedback information to the first communication node, so that the first communication node selects a reference resource based on the feedback information, that is, the first communication node is assisted in performing selection determination on resources; therefore, the reference resource with better performance can be selected for data transmission, and thus the sidelink resource utilization rate is improved.

In an embodiment, the indication information of the reference resource set includes: resource configuration information of the at least one reference resource.

Resource configuration information includes at least one of:
a time domain resource of a reference resource;
a frequency domain resource of a reference resource;
a time domain resource and a frequency domain resource of a reference resource; or
a resource pattern index of a reference resource.

In an embodiment, the indication information of the reference resource set further includes at least one of following parameters: a period of a reference resource; a priority threshold; a RSRP threshold; the number of reference resources which need to be fed back or a delay threshold of the feedback information.

In an embodiment, determining the feedback information for the at least one reference resource in the reference resource set includes at least one of cases described below.

The feedback information for the at least one reference resource in the reference resource set is determined as acknowledgement information, where the acknowledgement information represents that a corresponding reference resource is available.

The feedback information for the at least one reference resource in the reference resource set is determined as negative acknowledgement information, where the negative acknowledgement information represents that a corresponding reference resource is unavailable.

In an embodiment, in a case where each of the at least one reference resource is the second type resource, determining the feedback information for the at least one reference resource in the reference resource set includes at least one of cases described below.

The feedback information for the at least one reference resource in the reference resource set is determined as acknowledgement information, where the acknowledgement information represents that a corresponding reference resource is unavailable.

The feedback information for the at least one reference resource in the reference resource set is determined as negative acknowledgement information, where the negative acknowledgement information represents that a corresponding reference resource is available.

In an embodiment, determining the feedback information for the at least one reference resource in the reference resource set further includes that the feedback information is a measurement result of the at least one reference resource.

A measurement result includes at least one of:
RSRP of a reference resource;
priority of a reference resource; or
priority indicated in sidelink control information (SCI) received on a reference resource.

In an embodiment, the feedback information for the at least one reference resource in the reference resource set is determined, and the feedback information for the at least one reference resource is determined as acknowledgement information or negative acknowledgement information in one of following manners: indicating a reference resource by a bitmap; indicating a resource index number of a reference resource; or indicating a resource pattern index of a reference resource.

In an embodiment, in a case where the reference resource is indicated by a bitmap, feedback information for each reference resource in the reference resource set is separately indicated with 1 bit according to an order of the at least one reference resource in the reference resource set.

In an embodiment, in a case where the resource index number of the reference resource is indicated, the resource index number of the reference resource refers to one of resource index numbers described below.

The resource index number may be a resource index number determined by sequencing the at least one reference resource in the reference resource set according to an order of the at least one reference resource in the reference resource set.

The resource index number may be a resource index number determined by sequencing the at least one reference resource in the reference resource set according to a time domain order of the at least one reference resource in the reference resource set.

The resource index number may be a resource index number determined by sequencing reference resources which are after a slot where the feedback information is located according to a time domain order of the reference resources in the reference resource set.

A time domain slot number of the reference resource may be used as the resource index number of the reference resource.

A frequency domain subchannel serial number of the reference resource may be used as the resource index number of the reference resource.

In an embodiment, in a case where the RSRP of the reference resource is indicated, the feedback information for the at least one reference resource in the reference resource set includes one of:
RSRP of each reference resource in the reference resource set; or
RSRP of at least one reference resource in the reference resource set.

In an embodiment, the manner for the second communication node to determine the feedback information for the at least one reference resource in the reference resource set includes at least one of:
a monitoring result for a reference resource;
a resource conflict condition between a reference resource and other communication nodes;
whether a reference resource is used by a receiving terminal of sidelink information;
RSRP of a reference resource;
whether a reference resource is used by other communication nodes;
SCI received on a reference resource;
priority indicated in SCI received on a reference resource; or
priority of a reference resource.

In the embodiment, in a case where RSRP of a reference resource is lower than a set RSRP threshold, the feedback information is determined as acknowledgement information.

In a case where RSRP of a reference resource is higher than a set RSRP threshold, the feedback information is determined as negative acknowledgement information.

In a case where priority indicated in SCI received on a reference resource is higher than a set priority threshold, the feedback information is determined as negative acknowledgement information.

In a case where priority indicated in SCI received on a reference resource is lower than a set priority threshold, the feedback information is determined as acknowledgement information.

In a case where priority of a reference resource is higher than a set priority threshold, the feedback information is determined as acknowledgement information.

In a case where priority of a reference resource is lower than a set priority threshold, the feedback information is determined as negative acknowledgement information.

In an embodiment, the second communication node determines the feedback information for the at least one reference resource in the reference resource set in at least one of manners described below.

Feedback information for a reference resource is determined according to a period of the reference resource.

Feedback information for at least one of following numbers of reference resources is determined according to the number N of reference resources which need to be fed back: feedback information for N reference resources; feedback information for at least N reference resources; or feedback information for at most N reference resources.

In an embodiment, determining the feedback information corresponding the reference resource according to the period of the reference resource refers to that the second LTE performs accumulation averaging on measurement results of reference resources in multiple periods according to the indicated period, and further determines the feedback information for the reference resource according to an average result.

In an embodiment, the second communication node sends the feedback information before a delay threshold of the feedback information.

In an embodiment, the second communication node sends the feedback information in one of following manners: sending on a PSSCH resource, sending through an RRC message; sending through MAC information; sending through SCI; sending through second stage SCI; sending on a PSFCH resource; or sending on a reserved RB on a PSFCH symbol.

In an embodiment, an example where a PSCCH resource and a PSSCH resource are taken as reference resources is illustrated. For other sidelink channels, such as a PSBCH resource, a PSDCH resource and a PSFCH resource, the method described below may also be used. In addition, when various sidelink channels are used as reference resources for indication and feedback and then resource selection is performed, the used method is independent. That is, under the premise of no conflict, for different types of resources of sidelink channels, the indication and feedback of the resource set may be performed by using the method described below.

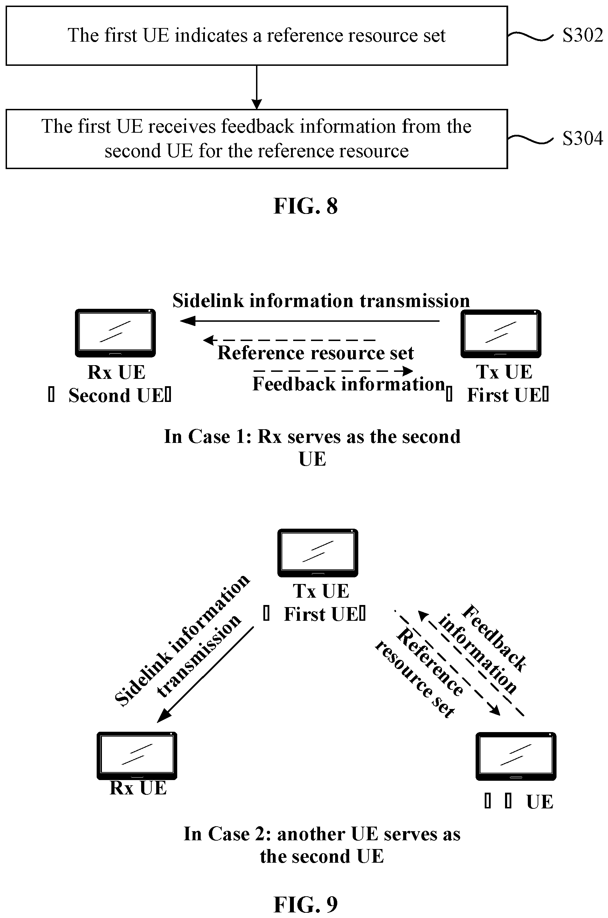

In an embodiment, FIG. 8 is a flowchart of another data transmission method according to an embodiment of the present application. In the embodiment, an example where a first communication node is a transmit LTE (denoted as a Tx LTE) and may also be referred to as a first UE, and a second communication node is a receive UE (denoted as an Rx UE) and may also be referred to as a second UE is used for illustrating the feedback process of a resource set of sidelink channels. The embodiment is applied to the first UE. As shown in FIG. 8, the method includes S302 and S304.

In S302, the first UE indicates a reference resource set.

The reference resource set includes one or more reference resources. The reference resource is a resource in a sidelink resource pool and includes at least one of following resources: a PSCCH resource, a PSSCH resource or a PSFCH resource.

In an embodiment, the reference resource refers to at least one of: a PSCCH resource; a PSSCH resource; a PSFCH resource; a PSCCH resource and an associated PSSCH resource; or a PSSCH resource and an associated PSFCH resource. As shown in FIG. 4, for any PSCCH resource, a corresponding PSSCH resource refers to one or more subchannel resources started from a subchannel overlapping an RB where the PSCCH resource is located on the frequency domain. That is, a PSCCH resource and an associated PSSCH resource refer to a PSCCH resource included in a subchannel having the smallest subchannel index number in the PSSCH resource.

As shown in FIG. 5, for any PSSCH resource, according to the configuration of the sidelink resource pool, a corresponding timing relationship and feedback manner exists between the PSSCH resource and the PSFCH resource. That is, a PSSCH resource and an associated PSFCH resource refer to one or more PSFCH resources corresponding to the PSSCH resource.

In an embodiment, the reference resource may be a candidate resource (that is, the first type resource in the preceding embodiments), and the Tx UE may select one or more candidate resources from a candidate resource set to send sidelink information, including sidelink control information and/or sidelink data information.

Alternatively, the reference resource may be a low-priority resource (that is, the second type resource in the preceding embodiments), which refers to an inapplicable resource when the Tx UE selects a resource for sending sidelink information; a resource excluded from the candidate resource set; a resource not included in the candidate resource set corresponding to the Tx LTE; or a resource with a lower probability to be selected or low priority when the Tx UE selects a resource.

In S304, the first UE receives feedback information from the second UE for the reference resource.

In the embodiment, the feedback information for the reference resource refers to the feedback information from the second UE for any one or more reference resources in the reference resource set. The second UE may be the receive UE (the Rx UE) when the Tx UE sends sidelink information. Alternatively, the second UE may be a UE other than the Tx UE and the Rx UE and is used for assisting in the processing of resources and/or information between the Tx UE and the Rx LTE; for example, the second LTE is a UE within a neighbor region of the Tx LTE; or the second UE may be a UE within a neighbor region of the Rx UE; or the second UE may be a UE that can communicate with both the Tx UE and the Rx UE. FIG. 9 is a diagram illustrating the configuration of a second LTE according to an embodiment of the present application. As shown in Case 1 in FIG. 9, the second UE is used not only for receiving sidelink information sent by the first LTE, but also for receiving a reference resource set and sending feedback information for at least one reference resource in the reference resource set, that is, the second UE is the Rx UE; as shown in Case 2 in FIG. 9, the second UE is only used for receiving a reference resource set and sending feedback information for at least one reference resource in the reference resource set, and does not receive sidelink information sent by the first UE, that is, the second UE and the Rx UE are not the same UE, or the second UE is a UE that can communicate with both the Tx UE and the Rx UE.

In an embodiment, in a case where the reference resource is a candidate resource (that is, the first type resource in the preceding embodiments), the feedback information for the reference resource includes at least one of cases described below.

Acknowledgement information for the candidate resource is fed back to the first UE, where the acknowledgement information for the candidate resource refers to that the second UE determines that the candidate resource is available.

Negative acknowledgement information for the candidate resource is fed back to the first UE, where the negative acknowledgement information for the candidate resource refers to that the second UE determines that the candidate resource is unavailable.

In an embodiment, in a case where the reference resource is a low-priority resource (that is, the second type resource in the preceding embodiments), the feedback information for the reference resource includes at least one of cases described below.

Acknowledgement information for the low-priority resource is fed back to the first UE, where the acknowledgement information for the low-priority resource refers to that the second LTE determines that the low-priority resource is unavailable.

Acknowledgement information for the low-priority resource is fed back to the first UE, where the acknowledgement information for the low-priority resource refers to that the second UE determines that the low-priority resource is available.

Negative acknowledgement information for the low-priority resource is fed back to the first UE, where the negative acknowledgement information for the low-priority resource refers to that the second UE determines that the low-priority resource is available.

Negative acknowledgement information for the low-priority resource is fed back to the first UE, where the negative acknowledgement indication of the low-priority resource refers to that the second UE determines that the low-priority resource is unavailable.

In an embodiment, the feedback information for the reference resource may further include: an indication of a measurement result of the reference resource. In the embodiment, the second LTE monitors and measures any one or more reference resources in the reference resource set indicated by the first UE, and feeds back the measurement result to the first UE. In an embodiment, the feedback information includes at least one of: RSRP of the reference resource, priority of the reference resource, or priority indicated in SCI received on the reference resource.

In an embodiment, the second UE may provide feedback for any one or more reference resources in the reference resource set, where the manner for indicating the feedback information includes at least one of: indicating the feedback information for the reference resource by a bitmap; indicating a resource index number of the reference resource; indicating a resource pattern index of the reference resource; or indicating RSRP of the reference resource.

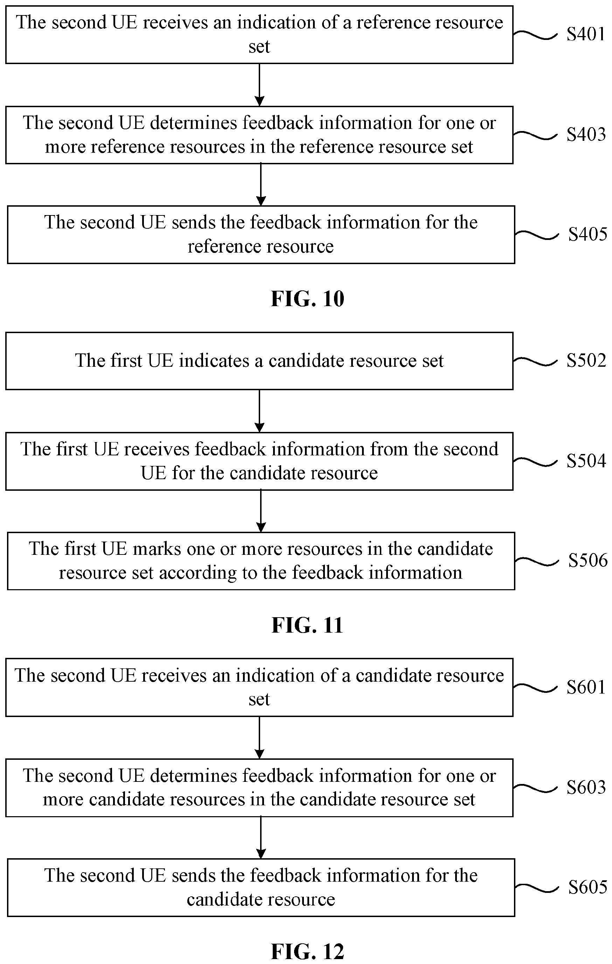

In an embodiment, FIG. 10 is a flowchart of another data transmission method according to an embodiment of the present application. In the embodiment, an example where a first communication node is a transmit UE (denoted as a Tx UE) and may also be referred to as a first UE, and a second communication node is a receive UE (denoted as an Rx UE) and may also be referred to as a second UE is used for illustrating the feedback process of a resource set of sidelink channels. The embodiment is applied to the second UE. As shown in FIG. 10, the embodiment includes S401, S403 and S405.

In S401, the second UE receives an indication of a reference resource set.

The reference resource set indicated by the first UE includes one or more reference resources.

In S403, the second UE determines feedback information for one or more reference resources in the reference resource set.

In S405, the second UE sends the feedback information for the reference resource.

In an embodiment, FIG. 11 is a flowchart of another data transmission method according to an embodiment of the present application. In the embodiment, an example where a first communication node is a transmit LTE (denoted as a Tx LTE) and may also be referred to as a first UE, a second communication node is a receive UE (denoted as an Rx UE) and may also be referred to as a second UE, and a reference resource in a reference resource set is a first type resource is used for illustrating the feedback process of a resource set of sidelink channels. In a case where the reference resource in the reference resource set is the first type resource, the reference resource set may be denoted as a candidate resource set. The embodiment is applied to the first UE. As shown in FIG. 11, the embodiment includes S502, S504 and S506.

In S502, the first UE indicates a candidate resource set.

The candidate resource set includes one or more candidate resources.

In S504, the first UE receives feedback information from the second UE for the candidate resource.

The feedback information for the candidate resource refers to acknowledgement information and/or negative acknowledgement information from the second UE for any one or more candidate resources in the candidate resource set.

In S506, the first UE marks one or more resources in the candidate resource set according to the feedback information.

In an embodiment, in a case where the second UE feeds back acknowledgement information for the candidate resource, the first UE marks one or more candidate resources corresponding to the acknowledgement information as available resources according to the feedback from the second UE.

In a case where the second UE feeds back negative acknowledgement information for the candidate resource, the first UE marks one or more candidate resources corresponding to the negative acknowledgement information as unavailable resources according to the feedback from the second LTE.

In the embodiment, for the marked available resources, the first LTE performs one or more of operations described below.

At least one available resource is randomly selected from the marked available resources for sending sidelink information;
At least one available resource is selected with a first preset probability from the marked available resources as sidelink sending resource. The first preset probability may be predefined by the system, determined by the Tx UE, randomly selected by the Tx UE, or randomly determined by the Tx UE within a range set by the system.

The marked available resources are placed in the candidate resource set, and at least one resource is randomly selected from the candidate resource set for sending sidelink information. The candidate resource set may further include other resources.

In the embodiment, for the marked unavailable resources, the first LTE performs one or more of operations described below.

The unavailable resources are excluded from the candidate resource set.

The unavailable resources are not selected as sidelink sending resources.

An unavailable resource is selected with a second preset probability as a sidelink sending resource. The second preset probability is predefined by the system, determined by the Tx LTE, randomly selected by the Tx UE, or randomly determined by the Tx UE within a range set by the system.

In the candidate resource set or a low-priority resource set, in a case where an empty set exists for a resource that is not marked as an unavailable resource, that is, no resource is available except for the unavailable resources, the first UE may select an unavailable resource as the sending resource.

In an embodiment, FIG. 12 is a flowchart of another data transmission method according to an embodiment of the present application. In the embodiment, an example where a first communication node is a transmit LTE (denoted as a Tx LTE) and may also be referred to as a first UE, a second communication node is a receive UE (denoted as an Rx UE) and may also be referred to as a second UE, and a reference resource in a reference resource set is a first type resource is used for illustrating the feedback process of a resource set of sidelink channels. In a case where the reference resource in the reference resource set is the first type resource, the reference resource set may be denoted as a candidate resource set. The embodiment is applied to the second UE. As shown in FIG. 12, the embodiment includes S601, S603 and S605.

In S601, the second UE receives an indication of a candidate resource set.

The candidate resource set indicated by the first UE includes one or more candidate resources.

In S603, the second UE determines feedback information for one or more candidate resources in the candidate resource set.

The feedback information for the candidate resource refers to acknowledgement information and/or negative acknowledgement information from the second UE for any one or more candidate resources in the candidate resource set.

In S605, the second UE sends the feedback information for the candidate resource.

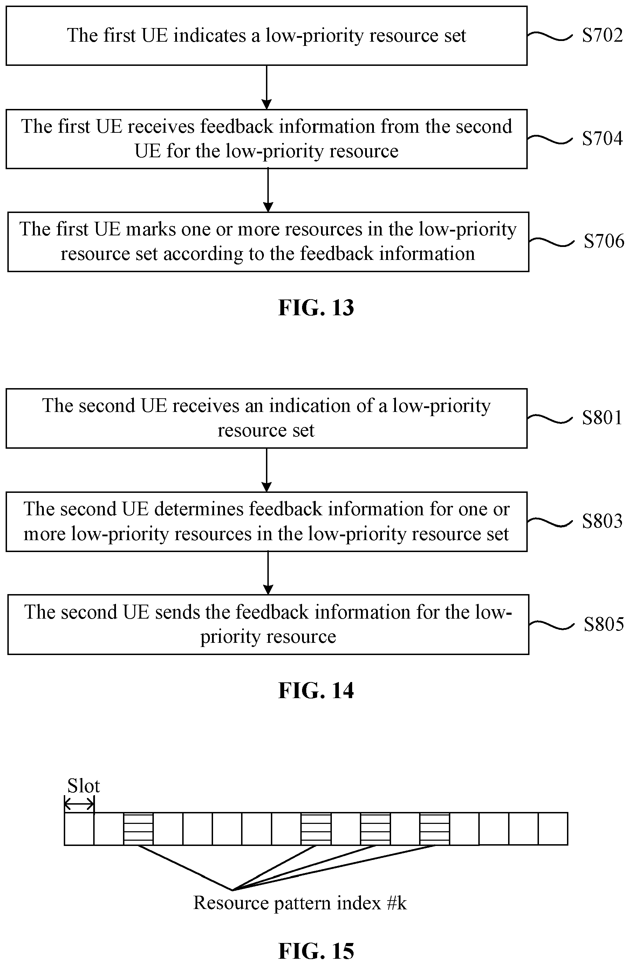

In an embodiment, FIG. 13 is a flowchart of another data transmission method according to an embodiment of the present application. In the embodiment, an example where a first communication node is a transmit UE (denoted as a Tx UE) and may also be referred to as a first UE, a second communication node is a receive UE (denoted as an Rx UE) and may also be referred to as a second UE, and a reference resource in a reference resource set is a second type resource is used for illustrating the feedback process of a resource set of sidelink channels. In a case where the reference resource in the reference resource set is the second type resource, the reference resource set may be denoted as a low-priority resource set. The embodiment is applied to the first UE. As shown in FIG. 13, the embodiment includes S702, S704 and S706.

In S702, the first UE indicates a low-priority resource set.

The low-priority resource set includes one or more low-priority resources.

In S704, the first LTE receives feedback information from the second LTE for the low-priority resource.

The feedback information for the low-priority resource refers to acknowledgement information and/or negative acknowledgement information from the second LTE for any one or more low-priority resources in the low-priority resource set.

In S706, the first LTE marks one or more resources in the low-priority resource set according to the feedback information.

In an embodiment, in a case where the second UE feeds back acknowledgement information for the low-priority resource and the acknowledgement information for the low-priority resource represents that the low-priority resource is unavailable, the first LTE marks one or more low-priority resources corresponding to the acknowledgement information as unavailable resources.

In a case where the second LTE feeds back negative acknowledgement information for the low-priority resource and the negative acknowledgement information for the low-priority resource represents that the low-priority resource is available, the first LTE marks one or more low-priority resources corresponding to the acknowledgement information as available resources.

In a case where the second LTE feeds back acknowledgement information for the low-priority resource and the acknowledgement information for the low-priority resource represents that the low-priority resource is available, the first UE marks one or more low-priority resources corresponding to the acknowledgement information as available resources.

In a case where the second LTE feeds back negative acknowledgement information for the low-priority resource and the negative acknowledgement information for the low-priority resource represents that the low-priority resource is unavailable, the first LTE marks one or more low-priority resources corresponding to the acknowledgement information as unavailable resources.

In an embodiment, for the marked available or unavailable resources, the further operations of the first UE is consistent with the description in the preceding embodiments where the reference resource set is denoted as a candidate resource set, which is not repeated here.

In an embodiment, FIG. 14 is a flowchart of another data transmission method according to an embodiment of the present application. In the embodiment, an example where a first communication node is a transmit UE (denoted as a Tx UE) and may also be referred to as a first UE, a second communication node is a receive UE (denoted as an Rx UE) and may also be referred to as a second UE, and a reference resource in a reference resource set is a second type resource is used for illustrating the feedback process of a resource set of sidelink channels. In a case where the reference resource in the reference resource set is the second type resource, the reference resource set may be denoted as a low-priority resource set. The embodiment is applied to the second UE. As shown in FIG. 14, the embodiment includes S801, S803 and S805.

In S801, the second UE receives an indication of a low-priority resource set.

The low-priority resource set indicated by the first UE includes one or more low-priority resources.

In S803, the second UE determines feedback information for one or more low-priority resources in the low-priority resource set.

The feedback information for the low-priority resource refers to acknowledgement information and/or negative acknowledgement information from the second LTE for any one or more low-priority resources in the low-priority resource set.

In S805, the second UE sends the feedback information for the low-priority resource.

In an embodiment, the first communication node indicating the reference resource set to the second UE includes: indicating resource configuration information of at least one reference resource. In an embodiment, the resource configuration information of the reference resource includes at least one of following pieces of information: a time domain resource of the reference resource, a frequency domain resource of the reference resource, a time domain resource and a frequency domain resource of the reference resource, or a resource pattern index of the reference resource.

The time domain resource of the reference resource is indicated, for example, it is indicated that the reference resource is located on slot #5 on the time domain; the frequency domain resource of the reference resource is indicated, for example, it is indicated that the reference resource is located in subchannel #7 or subchannels #5, #6 and #7 on the frequency domain; the time domain resource and the frequency domain resource of the reference resource are indicated, for example, it is indicated that the reference resource includes subchannel #7 on slot #5; the resource pattern index corresponding to the reference resource is indicated, where each pattern index corresponds to multiple resources and may be used for bearing multiple times of information transmission. In an embodiment, each pattern index may indicate multiple slots, multiple subchannels or multiple slots and subchannels. FIG. 15 is a diagram illustrating the indication between a resource pattern index and slots according to an embodiment of the present application. As shown in FIG. 15, each pattern index indicates multiple slots, and the indicated four slots serve as a reference resource. The second LTE provides feedback for the indicated multiple slots.

In an embodiment, the first LTE may further indicate one or more of following parameters: a period of the reference resource, a priority threshold, an RSRP threshold, the number of reference resources which need to be fed back by the second LTE; and a delay threshold of the second LTE reporting the feedback information. In the embodiment, the second UE may determine the feedback information according to the indicated period of the reference resource and/or priority threshold. For example, the reference resource is measured and evaluated according to a specified period and/or priority threshold, and the feedback information for the reference resource is further determined as acknowledgement information or negative acknowledgement information.

In the embodiment, according to the RSRP threshold indicated by the first LTE, the second LTE determines that the feedback information for the reference resource is acknowledgement information or negative acknowledgement information. For example, in a case where the second UE measures that the RSRP of the reference resource is higher than the RSRP threshold indicated by the first UE, the second UE determines the feedback information as acknowledgement information; in a case where the second UE measures that the RSRP of the reference resource is not higher than the RSRP threshold indicated by the first UE, the second UE determines the feedback information as negative acknowledgement information. In addition, the RSRP threshold may also be predefined or preconfigured by the system.

The number N, indicated by the first UE, of reference resources which need to be fed back by the second UE refers to that the feedback information sent by the second UE should include feedback information for N reference resources or feedback information for at least/at most N reference resources.

The delay threshold of the second UE reporting the feedback information indicated by the first LTE refers to that the second LTE should send the feedback information within a delay threshold range. For example, if the first LTE indicates that the delay threshold is 10ms, the second LTE is required to report the feedback information to the first UE within 10ms after receiving the indication of the reference resource set. In the embodiment, if the second UE is unable to complete the reporting of the feedback information within the specified delay threshold, the second LTE abandons sending the feedback information to the first UE.

In an embodiment, the first LTE may indicate the reference resource set to the second LTE in any one or more of following signaling manners: using a PSSCH resource for bearing; using an RRC message for bearing; using MAC information for bearing; using SCI for bearing; and using the 2^{nd} SCI format for bearing.

In an embodiment, in a case where the second UE sends the feedback information for the reference resource to the first UE, the feedback information may be indicated by using a bitmap. In the embodiment, the reference resource set indicated by the first UE includes multiple reference resources. According to an order of various reference resources in the set, the second UE provides one-to-one feedback indications of all reference resources in the reference resource set by using a bitmap.

In the embodiment, in the feedback information, if each bit corresponds to a reference resource, a bit of "1" represents that the feedback for a corresponding reference resource is acknowledgement, and a bit of "0" represents that the feedback for a corresponding reference resource is negative acknowledgement. Alternatively, the indication meaning of a bit is defined with the opposite indication content.

For example, in a case where the reference resource set includes 8 reference resources, the feedback information received by the first LTE from the second LTE is "1000 1100", which represents the first, fifth and sixth reference resources in the reference resource set. The feedback from the second UE is acknowledgement information, while the feedback for other resources is negative acknowledgement information.

In an embodiment, in a case where the second UE sends the feedback information for the reference resource to the first UE, the manner of indicating a resource index number of the reference resource may be used for indicating the feedback information. The reference resource corresponding to the indicated resource index number represents that the feedback information is acknowledgement information or negative acknowledgement information.

The reference resource set indicated by the first UE includes multiple reference resource, and the resource index number of the reference resource may be determined in at least one of manners described below.

In manner one, according to an order of various reference resources in the reference resource set, each reference resource correspond to a serial number index. For example, the serial number corresponding to the first reference resource in the reference resource set is #1, and serial numbers of other reference resources are deduced in sequence.

In manner two, according to a time domain order of various reference resources, each reference resource corresponds to a serial number index. The second UE indicates the serial number of the corresponding reference resource in the feedback information. For example, if the reference resource set includes three reference resources which are located on slot #1, slot #5 and slot #6 respectively, serial numbers of the corresponding reference resources are reference resource #1, reference resource #2 and reference resource #3.

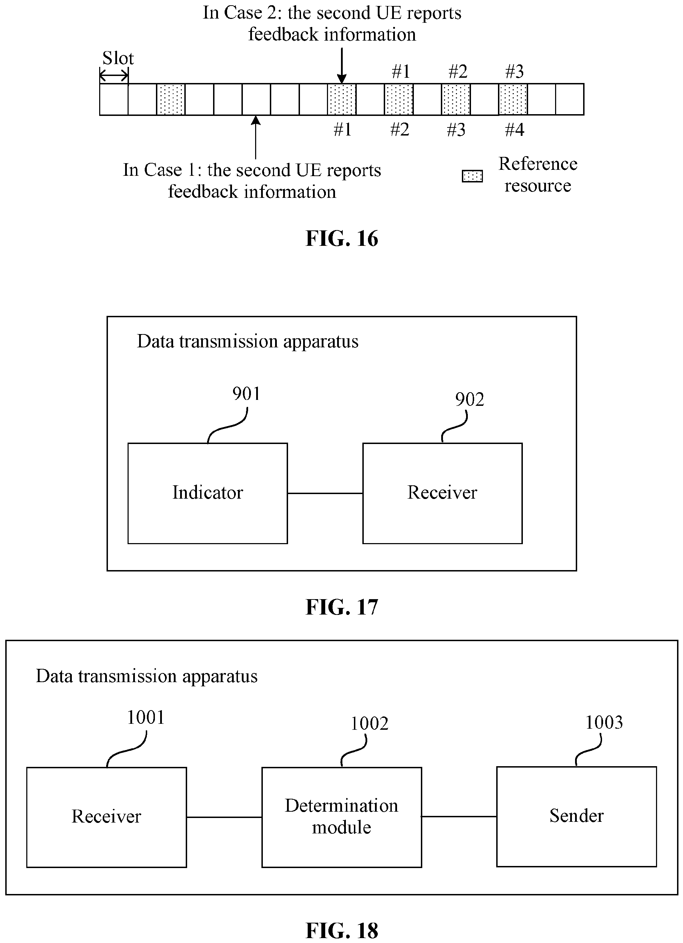

In manner three, the resource index number of the reference resource may be a reference index number determined by sequencing reference resources which are after the received feedback information according to a time domain order of the reference resources in the reference resource set. FIG. 16 is a diagram illustrating the determination of a resource index number of a reference resource according to an embodiment of the present application. As shown in FIG. 16, when the second UE sends the feedback information, for reference resources after the slot where the feedback information is located, each reference resource corresponds to a serial number according to a time domain order. As shown in Case 1 and Case 2 in FIG. 16, when the feedback information is sent on different slots, corresponding reference resource have different resource index numbers.

In manner four, a time domain slot number of the reference resource is used as the resource index number corresponding to the reference resource.

In manner five, a frequency domain subchannel index of the reference resource is used as the resource index number corresponding to the reference resource. In the embodiment, in a case where the reference resource includes multiple subchannels, a starting subchannel index (that is, the smallest subchannel index) of the frequency domain of the reference resource is used as the corresponding serial number.

In manner six, a pattern index of the reference resource is used as the resource index number corresponding to the reference resource.

In an embodiment, the second LTE indicates the resource index number of the corresponding reference resource in the feedback information. Specifically, the resource index number indicated in the feedback information represents that the feedback from the second UE for the reference resource is acknowledgement information or negative acknowledgement information. For example, in a case where the reference resource set includes 8 reference resources, the feedback information received by the first LTE from the second LTE is #1 and #5. In addition, the second LTE provides feedback to the first UE by feeding back acknowledgement information. The feedback information represents that the first reference resource and the fifth reference resource in the reference resource set are fed back as acknowledgement information.In an embodiment, in a case where the manner of indicating the resource index number of the reference resource is used for feeding back to the first UE, the number N of reference resources indicated in the feedback information may be configured by the first UE or determined by the second UE. When the number N of reference resources is configured by the first LTE, the first LTE indicates the number N of reference resources which need to be fed back in the indication signaling indicating the reference resource set. The number N of reference resources represents one of: the second UE feeds back feedback information for N reference resources to the first UE; the second UE feeds back feedback information for at least N reference resources to the first UE; or the second UE feeds back feedback information for at most N reference resources to the first UE.

In an embodiment, in a case where the second UE indicates resource index numbers of multiple reference resources, the second LTE may indicate the resource index numbers according to a certain rule. For example, the second UE indicates the resource index numbers of the multiple reference resources according to a priority order, or indicates resource index numbers of corresponding reference resources according to an order of measured RSRP values. For example, if the feedback information received by the first UE is slot #5 and slot #1, it is represented that in a measurement result of the second UE, the RSRP of the reference resource on slot #5 is the lowest, and the RSRP of the reference resource on slot #1 is the second lowest.

In an embodiment, during sidelink resource selection, the first UE may perform processing such as monitoring, measurement, reception and decoding on resources in a resource pool according to data sending requirements of the first UE to acquire an available resource set. In the embodiment, the first UE selects part of resources from the available resource set as reference resources to form a reference resource set, and indicates the reference resource set to the second UE. The first UE randomly selects one or more resources from the available resource set as reference resources, or selects one or more resources as reference resources according to a priority order.

In an embodiment, in a case where the second UE feeds back the RSRP of the reference resource to the first UE, the case described below is included.

RSRP corresponding to each reference resource in the reference resource set is fed back one by one.

Alternatively, the second UE feeds back RSRP of part of reference resources in the reference resource set. In the embodiment, the second UE indicates a resource index number of the fed back reference resource and corresponding RSRP. The second UE may provide feedback in sequence according to an order of RSRP values determined by measurement.

In an embodiment, the second UE determines the feedback information for the reference resource based on at least one of factors described below.

The second LTE may determine the feedback information for the reference resource based on a monitoring result of the reference resource, for example, determines RSPR of the reference resource as the feedback information.

The second LTE may determine the feedback information for the reference resource based on whether a resource conflict occurs between the reference resource and the sending by other UEs; for example, the feedback information for the reference resource with a resource conflict is determined as negative acknowledgement information.

The second LTE may determine the feedback information for the reference resource based on whether the reference resource is used by the Rx UE; for example, if the Rx UE uses the reference resource for information sending, the feedback information for the reference resource is negative acknowledgement information.

The second LTE may determine the feedback information for the reference resource based on RSRP of the reference resource; for example, the feedback for the reference resource of which RSRP reaches a specified RSRP threshold is determined as acknowledgement information.

The second LTE may determine the feedback information for the reference resource based on whether the reference resource is used by other UEs; for example, the feedback for a resource which is used by other LTEs or is reserved for future use is negative acknowledgement information.

The second LTE may determine the feedback information for the reference resource based on whether priority indicated in SCI received on the reference resource reaches a priority threshold; for example, if the priority reaches a priority threshold specified by the first LTE, the feedback for the reference resource is acknowledgement information.

In an embodiment, when the second UE reports the feedback information for the reference resource to the first UE, the second LTE may sends the feedback information through any one or more of following signaling manners:
using a PSSCH resource for bearing;
using an RRC message for bearing;
using MAC information for bearing;
using SCI for bearing;
using the 2^{nd} SCI format for bearing;
using a PSFCH for bearing; and
using a reserved RB on a PSFCH symbol for bearing.

In an embodiment, FIG. 17 is a block diagram of a data transmission apparatus according to an embodiment of the present application. The embodiment is executed by a first communication node. The first communication node refers to a sending terminal of sidelink information, that is, the Tx UE (the first UE) in the preceding embodiments. As shown in FIG. 17, the embodiment includes an indicator 901 and a receiver 902.

The indicator 901 is configured to indicate a reference resource set, where the reference resource set includes at least one reference resource, and the at least one reference resource includes at least one of: a first type resource or a second type resource.

The receiver 902 is configured to receive feedback information for at least one reference resource in the reference resource set.

In an embodiment, the first type resource is a reference resource that meets a first transmission condition.

Alternatively, the second type resource is a reference resource that meats a second transmission condition.

In an embodiment, the at least one reference resource includes at least one of:
a PSCCH resource;
a PSSCH resource;
a PSFCH resource;
a PSCCH resource and a PSSCH resource associated with the PSCCH resource; or
a PSSCH resource and a PSFCH resource associated with the PSSCH resource.

In an embodiment, the first communication node indicating the reference resource set includes: indicating resource configuration information of the at least one reference resource.

Resource configuration information includes at least one of:
a time domain resource of a reference resource;
a frequency domain resource of a reference resource;
a time domain resource and a frequency domain resource of a reference resource; or
a resource pattern index of a reference resource.

In an embodiment, the first communication node indicating the reference resource set includes indicating at least one of following parameters: a period of a reference resource; a priority threshold; a RSRP threshold; the number of reference resources which need to be fed back or a delay threshold of receiving the feedback information.

In an embodiment, the first communication node indicates the reference resource set in at least one of following manners: bearing on a PSSCH resource; indicating through a RRC message; indicating through MAC information; indicating through SCI or indicating through second stage SCI.

In an embodiment, receiving the feedback information for the at least one reference resource in the reference resource set includes at least one of cases described below.

Acknowledgement information for a reference resource is received, where the acknowledgement information represents that the corresponding reference resource is available.

Negative acknowledgement information for a reference resource is received, where the negative acknowledgement information represents that the corresponding reference resource is unavailable. In an embodiment, in a case where each of the at least one reference resource is the second type resource, receiving the feedback information for the at least one reference resource in the reference resource set includes at least one of cases described below.

Acknowledgement information for a reference resource is received, where the acknowledgement information represents that the corresponding reference resource is unavailable.

Negative acknowledgement information for a reference resource is received, where the negative acknowledgement information represents that the corresponding reference resource is available.

In an embodiment, receiving the feedback information for the at least one reference resource in the reference resource set further includes that the feedback information is a measurement result of the at least one reference resource.

A measurement result includes at least one of:
RSRP of a reference resource;
priority of a reference resource; or
priority indicated in SCI received on a reference resource.

In an embodiment, the first communication node marks at least one reference resource in the reference resource set according to the received feedback information.

In an embodiment, marking the at least one reference resource in the reference resource set includes at least one of cases described below.

In response to feedback information corresponding to a reference resource being acknowledgement information, the reference resource is marked as an available resource.

In response to feedback information corresponding to a reference resource being negative acknowledgement information, the reference resource is marked as an unavailable resource.

In response to feedback information corresponding to a reference resource being RSRP of the reference resource and the RSRP of the reference resource being lower than a set RSRP threshold, the reference resource is marked as an available resource.

In response to feedback information corresponding to a reference resource being RSRP of the reference resource and the RSRP of the reference resource being higher than a set RSRP threshold, the reference resource is marked as an unavailable resource.

In response to feedback information corresponding to a reference resource being priority of the reference resource and the priority of the reference resource being higher than a set priority threshold, the reference resource is marked as an available resource.

In response to feedback information corresponding to a reference resource being priority of the reference resource and the priority of the reference resource being lower than a set priority threshold, the reference resource is marked as an unavailable resource.

In response to feedback information corresponding to a reference resource being priority indicated in SCI received on the reference resource and the priority indicated in the SCI being higher than a set priority threshold, the reference resource is marked as an unavailable resource.

In response to feedback information corresponding to a reference resource being priority indicated in SCI received on the reference resource and the priority indicated in the SCI being lower than a set priority threshold, the reference resource is marked as an available resource.

In an embodiment, the first communication node selecting at least one resource for sending sidelink information includes at least one of cases described below.

The first communication node randomly selects at least one available resource from the marked available resource for sending the sidelink information.

The first communication node selects at least one available resource from the marked available resource with a first preset probability for sending the sidelink information.

The first communication node places the marked available resource in a candidate resource set, and randomly selects at least one resource from the candidate resource set for sending the sidelink information.

In an embodiment, the first communication node performs at least one of operations described below for the unavailable resource.

The unavailable resource is excluded from a candidate resource set.

The unavailable resource is selected with a second preset probability for sending sidelink information.

In a case where a candidate resource set or an available resource set is an empty set, the unavailable resource is selected for sending sidelink information.

In an embodiment, in the case where the each of the at least one reference resource is a second type resource, the first communication node marking the at least one reference resource in the reference resource set according to the feedback information includes at least one of cases described below.

In response to feedback information corresponding to a reference resource being acknowledgement information, the reference resource is marked as an unavailable resource.

In response to feedback information corresponding to a reference resource being negative acknowledgement information, the reference resource is marked as an available resource.

In an embodiment, the first communication node receiving the feedback information for the at least one reference resource in the reference resource set includes one of: receiving on a PSSCH resource; acquiring through an RRC message; acquiring through MAC information; acquiring through SCI; acquiring through second stage SCI; receiving on a PSFCH resource; or receiving on a reserved resource block (RB) on a PSFCH symbol.

In an embodiment, in the case of receiving the feedback information for the at least one reference resource in the reference resource set, the feedback information for the at least one reference resource may be determined as acknowledgement information or negative acknowledgement information in at least one of following manners: indicating a reference resource by a bitmap; a resource index number of a reference resource; or a resource pattern index of a reference resource.

In an embodiment, in a case where the feedback information for the at least one reference resource is determined as the acknowledgement information or the negative acknowledgement information by the bitmap, feedback information for each reference resource in the reference resource set is separately indicated with 1 bit according to an order of the at least one reference resource in the reference resource set.

In an embodiment, in a case where the feedback information for the at least one reference resource is determined as the acknowledgement information or the negative acknowledgement information according to the resource index number of the reference resource, the resource index number of the reference resource refers to at least one of resource index numbers described below.

The resource index number may be a resource index number determined by sequencing the at least one reference resource in the reference resource set according to an order of the at least one reference resource in the reference resource set.

The resource index number may be a resource index number determined by sequencing the at least one reference resource in the reference resource set according to a time domain order of the at least one reference resource in the reference resource set.

The resource index number may be a resource index number determined by sequencing reference resources which are after a slot where the feedback information is located according to a time domain order of the reference resources in the reference resource set.

A slot number of the reference resource may be used as the resource index number of the reference resource.

A frequency domain subchannel serial number of the reference resource may be used as the resource index number of the reference resource.

The data transmission apparatus provided in the embodiment is configured to implement the data transmission method applied to the first communication node in the embodiment shown in FIG. 6. The data transmission apparatus provided in the embodiment has the similar implementation principle and technical effect, and the details are not repeated here.

In an embodiment, FIG. 18 is a block diagram of another data transmission apparatus according to an embodiment of the present application. The embodiment is executed by a second communication node. The second communication node refers to a receiving terminal of sidelink information, and the second communication node may be a user equipment. As shown in FIG. 18, the embodiment includes a receiver 1001, a determination module 1002 and a sender 1003.

The receiver 1001 is configured to receive indication information of a reference resource set, where the reference resource set includes at least one reference resource, and the at least one reference resource includes at least one of: a first type resource or a second type resource.

The determination module 1002 is configured to determine feedback information for at least one reference resource in the reference resource set.

The sender 1003 is configured to send the feedback information.

In an embodiment, the indication information of the reference resource set includes: resource configuration information of the at least one reference resource.

Resource configuration information includes at least one of:
a time domain resource of a reference resource;
a frequency domain resource of a reference resource;
a time domain resource and a frequency domain resource of a reference resource; or
a resource pattern index of a reference resource.

In an embodiment, the indication information of the reference resource set further includes at least one of following parameters: a period of a reference resource; a priority threshold; a RSRP threshold; the number of reference resources which need to be fed back or a delay threshold of the feedback information.

In an embodiment, determining the feedback information for the at least one reference resource in the reference resource set includes at least one of cases described below.

The feedback information for the at least one reference resource in the reference resource set is determined as acknowledgement information, where the acknowledgement information represents that a corresponding reference resource is available.

The feedback information for the at least one reference resource in the reference resource set is determined as negative acknowledgement information, where the negative acknowledgement information represents that a corresponding reference resource is unavailable.

In an embodiment, in a case where each of the at least one reference resource is the second type resource, determining the feedback information for the at least one reference resource in the reference resource set includes at least one of cases described below.

The feedback information for the at least one reference resource in the reference resource set is determined as acknowledgement information, where the acknowledgement information represents that a corresponding reference resource is unavailable.

The feedback information for the at least one reference resource in the reference resource set is determined as negative acknowledgement information, where the negative acknowledgement information represents that a corresponding reference resource is available.

In an embodiment, determining the feedback information for the at least one reference resource in the reference resource set further includes that the feedback information is a measurement result of the at least one reference resource.

A measurement result includes at least one of:
RSRP of a reference resource;
priority of a reference resource; or
priority indicated in SCI received on a reference resource.

In an embodiment, the feedback information for the at least one reference resource in the reference resource set is determined, and the feedback information for the at least one reference resource is determined as acknowledgement information or negative acknowledgement information in at least one of following manners: indicating a reference resource by a bitmap; indicating a resource index number of a reference resource; or indicating a resource pattern index of a reference resource.

In an embodiment, in a case where the reference resource is indicated by a bitmap, feedback information for each reference resource in the reference resource set is separately indicated with 1 bit according to an order of the at least one reference resource in the reference resource set.

In an embodiment, in a case where the resource index number of the reference resource is indicated, the resource index number of the reference resource refers to one of resource index numbers described below.

The resource index number may be a resource index number determined by sequencing the at least one reference resource in the reference resource set according to an order of the at least one reference resource in the reference resource set.

The resource index number may be a resource index number determined by sequencing the at least one reference resource in the reference resource set according to a time domain order of the at least one reference resource in the reference resource set.

The resource index number may be a resource index number determined by sequencing reference resources which are after a slot where the feedback information is located according to a time domain order of the reference resources in the reference resource set.

A time domain slot number of the reference resource may be used as the resource index number of the reference resource.

A frequency domain subchannel serial number of the reference resource may be used as the resource index number of the reference resource.

In an embodiment, the manner for the second communication node to determine the feedback information for the at least one reference resource in the reference resource set includes at least one of:
a monitoring result for a reference resource;
a resource conflict condition between a reference resource and other communication nodes;
whether a reference resource is used by a receiving terminal of sidelink information;
RSRP of a reference resource;
whether a reference resource is used by other communication nodes;
SCI received on a reference resource;
priority indicated in SCI received on a reference resource; or
priority of a reference resource.

In an embodiment, the second communication node determines the feedback information for the at least one reference resource in the reference resource set in at least one of manners described below.

In a case where RSRP of a reference resource is lower than a set RSRP threshold, the feedback information is determined as acknowledgement information.

In a case where RSRP of a reference resource is higher than a set RSRP threshold, the feedback information is determined as negative acknowledgement information.

In a case where priority indicated in SCI received on a reference resource is higher than a set priority threshold, the feedback information is determined as negative acknowledgement information.

In a case where priority indicated in SCI received on a reference resource is lower than a set priority threshold, the feedback information is determined as acknowledgement information.

In a case where priority of a reference resource is higher than a set priority threshold, the feedback information is determined as acknowledgement information.

In a case where priority of a reference resource is lower than a set priority threshold, the feedback information is determined as negative acknowledgement information.

In an embodiment, the second communication node determines the feedback information for the at least one reference resource in the reference resource set in at least one of manners described below.

Feedback information for a reference resource is determined according to a period of the reference resource.

Feedback information for at least one of following numbers of reference resources is determined according to the number N of reference resources which need to be fed back:
feedback information for N reference resources;
feedback information for at least N reference resources; or
feedback information for at most N reference resources.

In an embodiment, the second communication node sends the feedback information before a delay threshold of the feedback information.

In an embodiment, the second communication node sends the feedback information in one of following manners: sending on a PSSCH resource, sending through an RRC message; sending through MAC information; sending through SCI; sending through second stage SCI; sending on a PSFCH resource; or sending on a reserved RB on a PSFCH symbol.

The data transmission apparatus provided in the embodiment is configured to implement the data transmission method applied to the second communication node in the embodiment shown in FIG. 7. The data transmission apparatus provided in the embodiment has the similar implementation principle and technical effect, and the details are not repeated here.

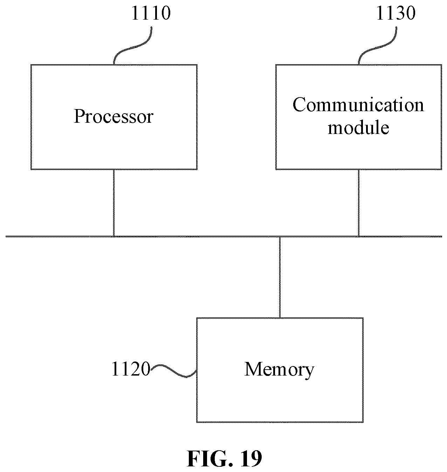

In an embodiment, FIG. 19 is a diagram illustrating the structure of a data transmission device according to an embodiment of the present application. As shown in FIG. 19, the data transmission device provided in the present application includes a processor 1110, a memory 1120 and a communication module 1130. One or more processors 1110 may be provided in the data transmission device, with one processor 1110 shown as an example in FIG. 19. One or more memories 1120 may be provided in the data transmission device, with one memory 1120 shown as an example in FIG. 19. The processor 1110, the memory 1120 and the communication module 1130 in the data transmission device may be connected via a bus or in other manners. FIG. 19 shows the connection via a bus as an example. In the embodiment, the data transmission device may be a client side (for example, a use equipment).

The memory 1120, as a computer-readable storage medium, may be configured to store software programs and computer executable programs and modules (for example, the indicator and the receiver in the data transmission apparatus) such as program instructions/modules corresponding to the data transmission device in any embodiment of the present application. The memory 1120 may include a program storage region and a data storage region, where the program storage region may store an operating system and an application program required by at least one function, and the data storage region may store data created depending on the use of the device. Additionally, the memory 1120 may include a high-speed random-access memory and may also include a nonvolatile memory, such as at least one magnetic disk memory, a flash memory or another nonvolatile solid-state memory. In some examples, the memory 1120 may further include memories remotely disposed relative to the processor 1110, and these remote memories may be connected to the device via a network. Examples of the preceding network include, but are not limited to, the Internet, an intranet, a local area network, a mobile communication network and a combination thereof.

The communication module 1130 is configured to perform communication interaction between the first communication node and a second communication node.

In an embodiment, the preceding data transmission device may also be configured to execute the data transmission method applied to the first communication node provided in any one of the preceding embodiments and has corresponding functions and effects.

In an embodiment, the preceding data transmission device may also be configured to execute the data transmission method applied to the second communication node provided in any one of the preceding embodiments and has corresponding functions and effects.

An embodiment of the present application further provides a storage medium including computer-executable instructions which, when executed by a computer processor, are used for executing the data transmission method applied to the first communication node. The method includes the following:
indicating a reference resource set, where the reference resource set includes at least one reference resource, and the at least one reference resource includes at least one of: a first type resource or a second type resource; and receiving feedback information for at least one reference resource in the reference resource set.

In an embodiment, an embodiment of the present application further provides a storage medium including computer-executable instructions which, when executed by a computer processor, are used for executing the data transmission method applied to the second communication node. The method includes the following: receiving indication information of a reference resource set, where the reference resource set includes at least one reference resource, and the at least one reference resource includes at least one of: a first type resource or a second type resource; determining feedback information for at least one reference resource in the reference resource set; and sending the feedback information.

It is to be understood by those skilled in the art that the term user equipment covers any suitable type of wireless user equipment, for example, a mobile phone, a portable data processing device, a portable web browser or a vehicle-mounted mobile station.

Generally speaking, various embodiments of the present application may be implemented in hardware or special-purpose circuits, software, logic or any combination thereof. For example, some aspects may be implemented in hardware while other aspects may be implemented in firmware or software executable by a controller, a microprocessor or another computing apparatus, though the present application is not limited thereto.

Embodiments of the present application may be implemented through the execution of computer program instructions by a data processor of a mobile apparatus, for example, implemented in a processor entity, by hardware or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules and functions, or may represent a combination of program steps and logic circuits, modules and functions. Computer programs may be stored in a memory. The memory may be of any type suitable for a local technical environment and may be implemented using any suitable data storage technology such as, but not limited to, a read-only memory (ROM), a random-access memory (RAM) or an optical memory device and system (a digital video disc (DVD) or a compact disc (CD)). Computer-readable media may include non-transitory storage media. The data processor may be of any type suitable for a local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.

## Claims

1. A data transmission method, applied to a first communication node, comprising:
indicating a reference resource set, wherein the reference resource set comprises at least one reference resource, and a reference resource of the at least one reference resource comprises at least one of: a first type resource or a second type resource; and
receiving feedback information for at least one reference resource in the reference resource set.

2. The method according to claim 1, wherein
the first type resource is a reference resource that meets a first transmission condition, wherein the first transmission condition is a condition that satisfies the first communication node transmitting sidelink information; or
the second type resource is a reference resource that meets a second transmission condition, wherein the second transmission condition is a condition that does not satisfy the first communication node transmitting sidelink information.

3. The method according to claim 1, wherein the reference resource comprises at least one of:
a physical sidelink control channel, PSCCH, resource;
a physical sidelink shared channel, PSSCH, resource;
a physical sidelink feedback channel, PSFCH, resource;
a PSCCH resource and a PSSCH resource associated with the PSCCH resource; or
a PSSCH resource and a PSFCH resource associated with the PSSCH resource.

4. The method according to claim 1, wherein indicating the reference resource set comprises:
indicating resource configuration information of the at least one reference resource, wherein
the resource configuration information comprises at least one of:
a time domain resource of a reference resource;
a frequency domain resource of a reference resource;
a time domain resource and a frequency domain resource of a reference resource; or
a resource pattern index of a reference resource.

5. The method according to claim 4, wherein indicating the reference resource set further comprises indicating at least one of following parameters: a period of a reference resource; a priority threshold; a reference signal received power, RSRP, threshold; a number of reference resources which need to be fed back or a delay threshold of receiving the feedback information.

6. The method according to claim 1, wherein indicating the reference resource set uses at least one of following manners: bearing on a PSSCH resource; indicating through a radio resource control, RRC, message; indicating through medium access control, MAC, information; indicating through sidelink control information, SCI, or indicating through second stage SCI.

7. The method according to claim 1, wherein in a case where the reference resource is the first type resource, receiving the feedback information for the at least one reference resource in the reference resource set comprises at least one of:
receiving acknowledgement information for a reference resource, wherein the acknowledgement information represents that the corresponding reference resource is available; or
receiving negative acknowledgement information for a reference resource, wherein the negative acknowledgement information represents that the corresponding reference resource is unavailable.

8. The method according to claim 1, wherein in a case where the reference resource is the second type resource, receiving the feedback information for the at least one reference resource in the reference resource set comprises at least one of:
receiving acknowledgement information for a reference resource, wherein the acknowledgement information represents that the corresponding reference resource is unavailable; or
receiving negative acknowledgement information for a reference resource, wherein the negative acknowledgement information represents that the corresponding reference resource is available.

9. The method according to claim 1, wherein receiving the feedback information for the at least one reference resource in the reference resource set comprises:
the feedback information being a measurement result of the reference resource, wherein a measurement result comprises at least one of:
RSRP of a reference resource;
priority of a reference resource; or
priority indicated in SCI received on a reference resource.

10. The method according to any one of claims 7 to 9, further comprising: marking at least one reference resource in the reference resource set according to the received feedback information.

11. The method according to claim 10, wherein in the case where the reference resource is the first type resource, marking the at least one reference resource in the reference resource set comprises at least one of:
in response to feedback information corresponding to a reference resource being acknowledgement information, marking the reference resource as an available resource;
in response to feedback information corresponding to a reference resource being negative acknowledgement information, marking the reference resource as an unavailable resource;
in response to feedback information corresponding to a reference resource being RSRP of the reference resource and the RSRP of the reference resource being lower than a set RSRP threshold, marking the reference resource as an available resource;
in response to feedback information corresponding to a reference resource being RSRP of the reference resource and the RSRP of the reference resource being higher than a set RSRP threshold, marking the reference resource as an unavailable resource;
in response to feedback information corresponding to a reference resource being priority of the reference resource and the priority of the reference resource being higher than a set priority threshold, marking the reference resource as an available resource;
in response to feedback information corresponding to a reference resource being priority of the reference resource and the priority of the reference resource being lower than a set priority threshold, marking the reference resource as an unavailable resource;
in response to feedback information corresponding to a reference resource being priority indicated in SCI received on the reference resource and the priority indicated in the SCI being higher than a set priority threshold, marking the reference resource as an unavailable resource; or
in response to feedback information corresponding to a reference resource being priority indicated in SCI received on the reference resource and the priority indicated in the SCI being lower than a set priority threshold, marking the reference resource as an available resource.

12. The method according to claim 10, wherein in the case where the reference resource is the second type resource, marking the at least one reference resource in the reference resource set according to the received feedback information comprises at least one of:
in response to feedback information corresponding to a reference resource being the acknowledgement information, marking the reference resource as an unavailable resource; or
in response to feedback information corresponding to a reference resource being the negative acknowledgement information, marking the reference resource as an available resource.

13. The method according to claim 11 or 12, further comprising: selecting at least one resource for sending sidelink information, comprising at least one of:
randomly selecting at least one available resource from the marked available resource for sending the sidelink information;
selecting at least one available resource from the marked available resource with a first preset probability for sending the sidelink information; or
placing the marked available resource in a candidate resource set, and randomly selecting at least one resource from the candidate resource set for sending the sidelink information.

14. The method according to claim 11 or 12, further comprising: for the unavailable resource, performing at least one of:
excluding the unavailable resource from a candidate resource set;
selecting the unavailable resource with a second preset probability for sending sidelink information; or
in a case where a candidate resource set or an available resource set is an empty set, selecting the unavailable resource for sending sidelink information.

15. The method according to claim 1, wherein receiving the feedback information for the at least one reference resource in the reference resource set comprises one of: receiving on a PSSCH resource; acquiring through an RRC message; acquiring through MAC information; acquiring through SCI; acquiring through second stage SCI; receiving on a PSFCH resource; or receiving on a reserved resource block, RB, on a PSFCH symbol.

16. The method according to claim 7 or 8, wherein the feedback information for the reference resource is determined as acknowledgement information or negative acknowledgement information in at least one of following manners: indicating a reference resource by a bitmap; a resource index number of a reference resource; or a resource pattern index of a reference resource.

17. The method according to claim 16, wherein in a case where the feedback information for the reference resource is determined as the acknowledgement information or the negative acknowledgement information by the bitmap, feedback information for each reference resource in the reference resource set is separately indicated with 1 bit according to an order of the at least one reference resource in the reference resource set.

18. The method according to claim 16, wherein in a case where the feedback information for the at least one reference resource is determined as the acknowledgement information or the negative acknowledgement information according to the resource index number of the reference resource, the resource index number of the reference resource refers to one of:
a resource index number determined by sequencing the at least one reference resource in the reference resource set according to an order of the at least one reference resource in the reference resource set;
a resource index number determined by sequencing the at least one reference resource in the reference resource set according to a time domain order of the at least one reference resource in the reference resource set;
a resource index number determined by sequencing reference resources which are after a slot where the feedback information is located according to a time domain order of the reference resources in the reference resource set;
using a slot number of the reference resource as the resource index number of the reference resource; or
using a frequency domain subchannel serial number of the reference resource as the resource index number of the reference resource.

19. A data transmission method, applied to a second communication node, comprising:
receiving indication information of a reference resource set, wherein the reference resource set comprises at least one reference resource, and a reference resource of the at least one reference resource comprises at least one of: a first type resource or a second type resource;
determining feedback information for at least one reference resource in the reference resource set; and
sending the feedback information.

20. The method according to claim 19, wherein the indication information of the reference resource set comprises: resource configuration information of the at least one reference resource; and
resource configuration information comprises at least one of:
a time domain resource of a reference resource;
a frequency domain resource of a reference resource;
a time domain resource and a frequency domain resource of a reference resource; or
a resource pattern index of a reference resource.

21. The method according to claim 19, wherein the indication information of the reference resource set comprises at least one of following parameters: a period of a reference resource; a priority threshold; a reference signal received power, RSRP, threshold; a number of reference resources which need to be fed back or a delay threshold of the feedback information.

22. The method according to claim 19, wherein in a case where the reference resource is the first type resource, determining the feedback information for the at least one reference resource in the reference resource set comprises at least one of:
determining the feedback information for the at least one reference resource in the reference resource set as acknowledgement information, wherein the acknowledgement information represents that a corresponding reference resource is available; or
determining the feedback information for the at least one reference resource in the reference resource set as negative acknowledgement information, wherein the negative acknowledgement information represents that a corresponding reference resource is unavailable.

23. The method according to claim 19, wherein in a case where the reference resource is the second type resource, determining the feedback information for the at least one reference resource in the reference resource set comprises at least one of:
determining the feedback information for the at least one reference resource in the reference resource set as acknowledgement information, wherein the acknowledgement information represents that a corresponding reference resource is unavailable; or
determining the feedback information for the at least one reference resource in the reference resource set as negative acknowledgement information, wherein the negative acknowledgement information represents that a corresponding reference resource is available.

24. The method according to claim 19, wherein determining the feedback information for the at least one reference resource in the reference resource set comprises: the feedback information being a measurement result of the at least one reference resource,
wherein a measurement result comprises at least one of:
RSRP of a reference resource;
priority of a reference resource; or
priority indicated in sidelink control information, SCI, received on a reference resource.

25. The method according to claim 22 or 23, wherein the feedback information for the reference resource is indicated as acknowledgement information or negative acknowledgement information in at least one of following manners: indicating a reference resource by a bitmap; indicating a resource index number of a reference resource; or indicating a resource pattern index of a reference resource.

26. The method according to claim 25, wherein in a case where the reference resource is indicated by the bitmap, feedback information for each reference resource in the reference resource set is separately indicated with 1 bit according to an order of the at least one reference resource in the reference resource set.

27. The method according to claim 25, in a case where the resource index number of the reference resource is indicated, the resource index number of the reference resource refers to one of:
a resource index number determined by sequencing the at least one reference resource in the reference resource set according to an order of the at least one reference resource in the reference resource set;
a resource index number determined by sequencing the at least one reference resource in the reference resource set according to a time domain order of the at least one reference resource in the reference resource set;
a resource index number determined by sequencing reference resources which are after a slot where the feedback information is located according to a time domain order of the reference resources in the reference resource set;
using a slot number of the reference resource as the resource index number of the reference resource; or
using a frequency domain subchannel serial number of the reference resource as the resource index number of the reference resource.

28. The method according to claim 19, wherein the feedback information for the at least one reference resource in the reference resource set is determined according to at least one of:
in a case where RSRP of a reference resource is lower than a set RSRP threshold, determining the feedback information as acknowledgement information;
in a case where RSRP of a reference resource is higher than a set RSRP threshold, determining the feedback information as negative acknowledgement information;
in a case where priority indicated in SCI received on a reference resource is higher than a set priority threshold, determining the feedback information as negative acknowledgement information;
in a case where priority indicated in SCI received on a reference resource is lower than a set priority threshold, determining the feedback information as acknowledgement information;
in a case where priority of a reference resource is higher than a set priority threshold, determining the feedback information as acknowledgement information; or
in a case where priority of a reference resource is lower than a set priority threshold, determining the feedback information as negative acknowledgement information.

29. The method according to claim 21, wherein the feedback information for the at least one reference resource in the reference resource set is determined according to at least one of:
determining feedback information for the reference resource according to a period of the reference resource; or
determining feedback information for at least one of following numbers of reference resources according to a number N of reference resources which need to be fed back:
feedback information for N reference resources;
feedback information for at least N reference resources; or
feedback information for at most N reference resources.

30. The method according to claim 21, before a delay threshold of the feedback information, sending the feedback information.

31. The method according to claim 19, wherein sending the feedback information comprises sending the feedback information in one of following manners: sending on a physical sidelink shared channel, PSSCH, resource; sending through a radio resource control, RRC, message; sending through SCI; sending through second stage SCI; sending on a physical sidelink feedback channel, PSFCH, resource; or sending on a reserved resource block, RB, on a PSFCH symbol.

32. A data transmission device, comprising a communication module, a memory and one or more processors, wherein
the communication module is configured to perform communication interaction between a first communication node and a second communication node; and
the memory is configured to store one or more programs;
wherein the one or more programs, when executed by the one or more processors, cause the one or more processors to implement the method according to any one of claims 1 to 18 or claims 19 to 31.

33. A storage medium for storing a computer program which, when executed by a processor, implements the method according to any one of claims 1 to 18 or claims 19 to 31.
